(19) **Europäisches Patentamt European Patent Office Office européen des brevets**

(11) **EP 4 567 385 A1**

(12) **EUROPEAN PATENT APPLICATION**

(43) Date of publication:
**11.06.2025  Bulletin 2025/24**

(21) Application number: **24217247.6**

(22) Date of filing: **03.12.2024**

(51) International Patent Classification (IPC):
**G01F 23/2962** (2022.01)    **G01F 23/2965** (2022.01)
**F17C 13/02** (2006.01)    **B64D 37/30** (2006.01)

(52) Cooperative Patent Classification (CPC):
**G01F 23/2962; G01F 23/2965; B64D 37/30;
F17C 13/021**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.12.2023  US 202318527614**

(71) Applicant: **Simmonds Precision Products, Inc.
Vergennes, VT 05491 (US)**

(72) Inventors:
 • **BHUIYAN, Yeasin
   Vergennes, 05491 (US)**
 • **CARINI, Peter J.
   Underhill, 05489 (US)**

(74) Representative: **Dehns
10 Old Bailey
London EC4M 7NG (GB)**

(54) **LIQUID LEVEL SENSING SYSTEM AND METHOD FOR MEASURING LIQUID LEVEL**

(57)    A liquid level sensing system (100) includes a sensing probe (102) including an axial guided wave (AGW) transducer (106), the AGW transducer (106) including a sensing element (108), and a rod (110) operatively associated with the AGW transducer (106), the AGW transducer (106) operatively connected to a first end (112) of the rod (110). The liquid level sensing system (100) includes a liquid tank (104), such that a second end (114) of the rod (110) extends through an opening (116) in an inner wall (118) of the liquid tank (104) into the liquid tank (104), the first end (112) of the rod (110) and the AGW transducer (106) being outside of the inner wall (118) of the liquid-hydrogen tank (104).

**Fig. 1a**

EP 4 567 385 A1

**Description**

## FIELD

This disclosure relates to a system for measuring the liquid level in a liquid-hydrogen tank, and more particularly for measuring the liquid level of liquid-hydrogen tanks aboard an aircraft.

## BACKGROUND

It is important that liquid-hydrogen tanks aboard aircrafts maintain low temperature and low pressure inside the tanks. For instance, in an aircraft, liquid-hydrogen fuel is kept in cryogenic temperature (about 16 to 20K, i.e., -257 to -253°C, or -431 to -423°F). The pressure inside a liquid-hydrogen tank is generally kept below 2 to3 bar. Rising temperature and pressure within liquid-hydrogen tanks is to be avoided. Traditional approaches for measuring the liquid level within liquid-hydrogen tanks direct energy into the tanks, which adversely affects the temperature and pressure within the tank. For example, some traditional sensing methods inject electric power into liquid-hydrogen tanks which increases the temperature and pressure inside the tank.

Such conventional methods and systems have generally been considered satisfactory for their intended purpose. However, there is still a need in the art for non-invasive methods for measuring the liquid level in a liquid-hydrogen tank which does not affect the temperature and pressure within the tank. The present disclosure provides a solution for this need.

## SUMMARY

A liquid level sensing system includes a sensing probe and a liquid tank. The sensing probe includes an axial guided wave (AGW) transducer, the AGW transducer including a sensing element and a rod operatively associated with the AGW transducer. The AGW transducer is operatively connected to a first end of the rod. A second end of the rod extends through an opening in an inner wall of the liquid tank into the liquid tank. The first end of the rod and the AGW transducer are outside of the inner wall of the liquid tank. The liquid tank can be a liquid-hydrogen tank.

The inner wall of the liquid-hydrogen tank can be surrounded by an outer wall. The second end of the rod can extend through an opening in the inner wall. In certain embodiments, there can be an opening in the outer wall that is aligned with the opening in the inner wall such that the second end of the rod can extend through the opening in the outer wall and into the opening in the inner wall. The openings in the inner and outer walls of the liquid-hydrogen tank can be at a top side of the liquid-hydrogen tank, the top side of the liquid-hydrogen tank being opposite a bottom side of the liquid-hydrogen tank. The second end of the rod can be spaced apart from the bottom side of the liquid-hydrogen tank. The outer wall of the liquid-hydrogen tank and the inner wall of the liquid-hydrogen tank can be separated by a vacuum jacket.

In certain embodiments, the sensing probe can be positioned at an angle with respect to a liquid level plane of the liquid-hydrogen tank. The angle of the sensing probe with respect to the liquid level plane can be greater than zero degrees and less than 180 degrees.

In certain embodiments, the sensing element can include at least one transmitter and/or receiver. The at least one transmitter and/or receiver can include one transmitter and a plurality of receivers. The at least one transmitter and/or receiver can include one transmitter and one receiver. The sensing element can be configured to act as both a transmitter and receiver.

The liquid-hydrogen tank can include both liquid-hydrogen and gaseous hydrogen and a liquid-hydrogen gaseous hydrogen interface therebetween. The liquid-hydrogen can occupy a bottom portion of the liquid-hydrogen tank and the gaseous hydrogen can occupy a top portion of the tank. The at least one transmitter can be configured to transmit a pulse along a length of the rod from the first end of the rod to the second end of the rod and back to the first end of the rod. The at least one receiver can be configured to receive a reflected pulse.

In certain embodiments, the liquid-hydrogen tank can be a first liquid-hydrogen tank, and the liquid level sensing system can further include a second liquid-hydrogen tank positioned at different location from the first liquid-hydrogen tank on an aircraft. In certain embodiments, a longitudinal axis of the liquid-hydrogen tank can extend parallel to a liquid level surface within the liquid-hydrogen tank. In other embodiments, the longitudinal axis of the liquid-hydrogen tank can be perpendicular to the liquid level surface within the liquid-hydrogen tank. In certain embodiments, the liquid-hydrogen tank can be spherical.

In certain embodiments, the rod can be hollow. In other embodiments, the rod can be solid. In some embodiments, the rod can be a metallic rod.

A method for measuring a liquid level includes sending a pulse from a transmitter at a first end of a rod along a length of the rod to a second end of the rod in a liquid-hydrogen tank and back up the length of the rod to the first end of the rod, receiving the pulse at a receiver at the first end of the rod, and measuring data collected about the pulse to determine a liquid level in the liquid-hydrogen tank. The pulse can be an axial guided wave transmitted along a longitudinal axis of the rod.

In certain embodiments, measuring data can further include measuring time it takes for the axial guided wave to travel from the first end of the rod to the second end of the rod and back to the first end of the rod and calculating the speed of the axial guided wave, and measuring time it takes for the axial guided wave to travel from the first end of the rod to a liquid level and back up to the first end of the rod and determining the liquid level based on difference between the time it takes for the axial guided wave to travel from the first end of the rod to the second end of the rod and back to the first end of the rod and the time it takes for the axial guided wave to travel from the first end of the rod to the liquid level and back to the first end of the rod.

In certain embodiments, measuring data can further include measuring a change in amplitude of the axial guided wave as it travels from the first end of the rod through a liquid level plane to the second end of the rod back through the liquid level plane to the first end of the rod. In certain embodiments, measuring data can further include measuring a change in hydrostatic pressure of the axial guided wave as it travels from the first end of the rod through a liquid level plane to the second end of the rod back through the liquid level plane to the first end of the rod. In some embodiments, the pulse can be a Rayleigh wave transmitted along an outer circumference of the rod.

These and other features of the embodiments of the subject disclosure will become more readily apparent to those skilled in the art from the following detailed description taken in conjunction with the drawings.

## BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

Fig. 1a is a schematic cross-sectional side elevation view of a liquid level sensing system in accordance with this disclosure, showing liquid within a liquid-hydrogen tank;

Fig. 1b is a schematic cross-sectional side elevation view of the liquid level sensing system of Fig. 1a, showing the liquid-hydrogen tank being empty;

Fig. 2a is a schematic top view of an AGW transducer in accordance with this disclosure, showing an embodiment of the sensing element having a transmitter and a plurality of receivers;

Fig. 2b is schematic a top view of an AGW transducer in accordance with this disclosure, showing another embodiment of the sensing element having a transmitter and a receiver;

Fig. 2c is a schematic top view of an AGW transducer in accordance with this disclosure, showing another embodiment of the sensing element, where the sensing element acts as both a transmitter and receiver;

Fig. 3 is a schematic perspective view of an aircraft having two liquid-hydrogen tanks in accordance with the present disclosure;

Fig. 4a is a schematic cross-sectional side elevation view of a liquid-hydrogen tank in accordance with the present disclosure, showing another embodiment of liquid-hydrogen tank orientation where there is liquid in the liquid hydrogen tank;

Fig. 4b is a schematic cross-sectional side elevation view of the liquid-hydrogen tank of Fig. 4a, showing the liquid hydrogen tank being empty;

Fig. 5a is a schematic cross-sectional side elevation view of a liquid-hydrogen tank in accordance with the present disclosure, showing another embodiment of shape for a liquid-hydrogen tank, where there is liquid in the liquid-hydrogen tank;

Fig. 5b is a schematic cross-sectional side elevation view of the liquid-hydrogen tank of Fig. 5a, showing the liquid-hydrogen tank being empty;

Fig. 6a is a schematic perspective view of a rod for a sensing probe in accordance with the present disclosure, showing the rod being solid;

Fig. 6b is a schematic perspective view in partial cross section of a rod for a sensing probe in accordance with the present disclosure, showing the rod being hollow;

Fig. 7 is a schematic cross-sectional side elevation view of the liquid level sensing system of Fig. 1a, showing axial guided wave propagation through a rod waveguide;

Fig. 8 is a schematic view of a sensing probe in accordance with the present disclosure, showing the effect of hydrostatic pressure exerted by liquid-hydrogen on the sensing probe;

Fig. 9 is a schematic view of the sensing probe of Fig. 8, showing axial guided wave propagation along the rod and the corresponding strain/stress representation;

Fig. 10 is a schematic view of the sensing probe of Fig. 9, showing reflected axial guided waves along the rod and the corresponding strain/stress representation; and

Fig. 11 is a schematic view of the sensing probe of Fig. 8, showing leaking axial guided waves as axial guided waves travel from a first end of the rod to a second end of a rod and back to the first end of the rod.

## DETAILED DESCRIPTION

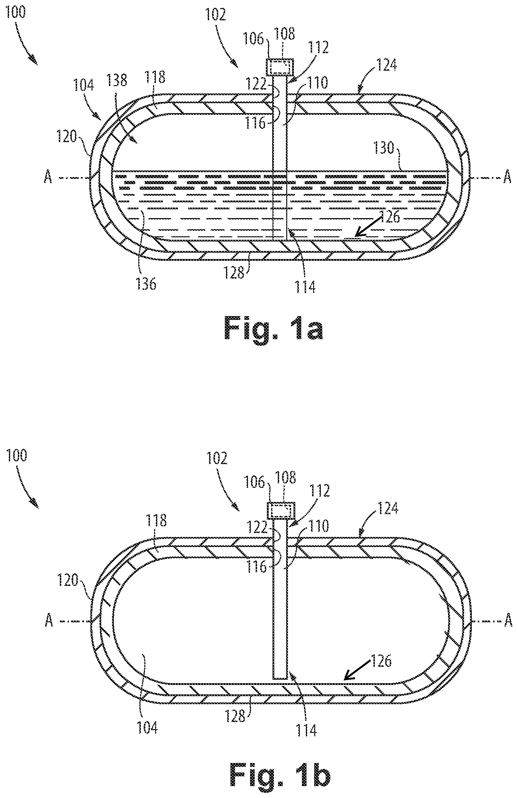

Reference will now be made to the drawings wherein like reference numerals identify similar structural features or aspects of the subject disclosure. For purposes of explanation and illustration, and not limitation, an illustrative view of an embodiment of a liquid level sensing system in accordance with the disclosure is shown in Fig. 1a and is designated generally by reference character 100. Other embodiments and/or aspects of this disclosure are shown in Figs. 1b-11.

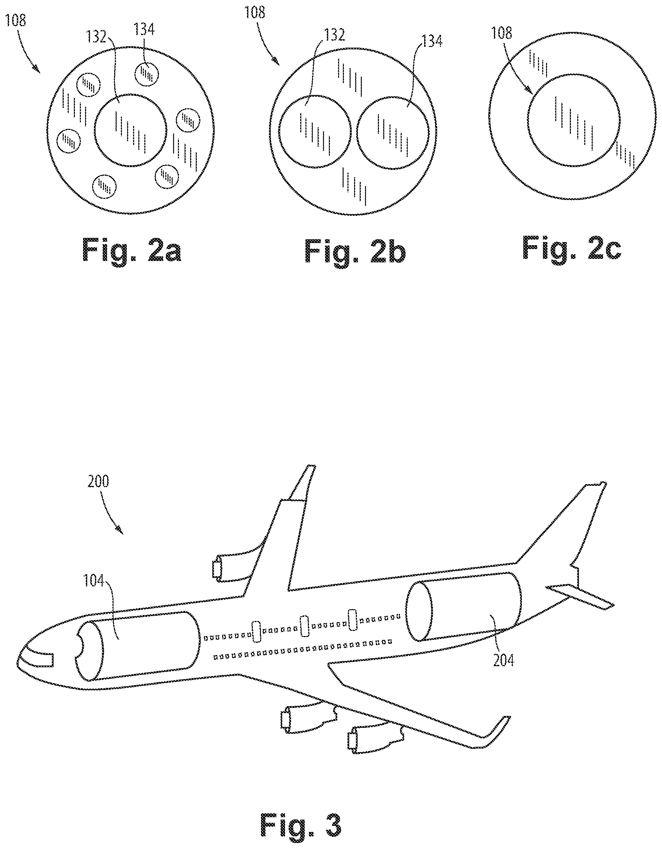

With reference to Figs. 1a-1b, a liquid level sensing system 100 includes a sensing probe 102 and a liquid-hydrogen tank 104 (e.g., the liquid level sensing system 100 is aboard an aircraft). In Fig. 1a, the liquid-hydrogen tank 104 is shown with liquid in it and in Fig. 1b, the liquid-hydrogen tank 104 is shown being empty. The sensing probe 102 includes an axial guided wave (AGW) transducer 106, the AGW transducer 106 including a sensing element 108 (e.g., as shown in Figs. 2a-2c) and a rod 110 operatively associated with the AGW transducer 106. The AGW transducer 106 is operatively connected to the rod 110 at a first end of the rod 112. A second end of the rod 114 extends through an opening 116 in an inner wall 118 of the liquid-hydrogen tank 104 into the liquid-hydrogen tank 104. The first end of the rod 112 and the AGW transducer 106 are outside of the inner wall 118 of the liquid-hydrogen tank 104.

The inner wall 118 of the liquid-hydrogen tank 104 can be surrounded by an outer wall 120. The end of the rod 114 can extend through an opening 122 in the outer wall 120 (e.g., the the rod can be screwed through a connector attached to the outer wall) into the opening 116 in the inner wall 118. The opening 122 in the outer wall 120 can be aligned with the opening 116 in the inner wall 118. The openings in the inner and outer walls (116, 122 respectively) of the liquid-hydrogen tank 104 can be at a top side 124 of the liquid-hydrogen tank 104, the top side 124 of the liquid-hydrogen tank 104 being opposite a bottom side 126 of the liquid-hydrogen tank 104. The second end of the rod 114 can be spaced apart from the bottom side 126 of the liquid-hydrogen tank 104 (e.g., as seen most clearly in Fig. 1b, 4b, and 5b, a gap exists between the second end of the rod 114 and the bottom side 126 of the liquid-hydrogen tank 104 such that they do not contact eachother and the second end of the rod is free). The outer wall 120 of the liquid-hydrogen tank 104 and the inner wall 118 of the liquid-hydrogen tank 104 can be separated by a vacuum jacket 128.

In certain embodiments, the sensing probe 102 can be positioned at an angle with respect to a liquid level plane 130 of the liquid-hydrogen tank 104. The angle of the sensing probe 102 with respect to the liquid level plane 130 can be greater than zero degrees and less than 180 degrees (e.g., as shown in Figs. 1a-1b, the angle of the sensing probe with respect to the liquid level plane is 90 degrees). The sensing probe 102 can be vertical with the liquid plane 130 (e.g., not horizontal).

With reference to Figs. 2a-2c, the sensing element 108 can include at least one transmitter 132 and/or receiver 134. The at least one transmitter 132 and/or receiver 134 can include one transmitter 132 and a plurality of receivers 134 (e.g., as shown in Fig. 2a). As shown in Fig. 2a, the transmitter 132 acts as a source and transmits a pulse (e.g., certain shape of sourcing wave) and each of the plurality of receivers 134 (e.g., six as shown in Fig. 2a) sense the wave response. The certain shape of sourcing wave can include a square pulse, tone burst, and chirp. It is contemplated herein that any number of transmitters and/or receivers can be included. The at least one transmitter 132 and/or receiver 134 can include one transmitter 132 and one receiver 134 (e.g., as shown in Fig. 2b). With reference to Fig. 2b, the transmitter 132 acts a source to transmit a sourcing wave and the receiver 134 acts as a sensor to sense the axial guided waves. The sensing element 108 can be configured to act as a transmitter and receiver (e.g., as shown in Fig. 2c). For instance, the sensing element 108 can be configured to switch between being in a transmitting mode, when it acts as a transmitter and a receiving mode, when it acts as a receiver. In this configuration, the same sensing element 108 acts as both a transmitter and a receiver. The sensing element can be programmed to act as a transmitter in one mode and a receiver in another mode and to switch between the two modes.

The liquid-hydrogen tank 104 can include both liquid-hydrogen and gaseous hydrogen (e.g., hydrogen vapor occupying the empty portion of the liquid-hydrogen tank) and a liquid-hydrogen gaseous hydrogen interface can exist therebetween. As shown in Fig. 1a, the liquid-hydrogen occupies a bottom portion 136 of the liquid-hydrogen tank 104 and the gaseous hydrogen occupies a top portion 138 of the liquid-hydrogen tank 104. The at least one transmitter 132 can be configured to transmit a sourcing wave (e.g., axial guided waves having ultrasonic characteristics) along a length of the rod 110 from the first end of the rod 112 to the second end of the rod 114 and back to the first end of the rod 112. The sourcing wave through the rod propagate as certain guided waves that have ultrasonic characteristics like the axial guided waves. The at least one receiver 134 can be configured to receive a reverse pulse. A density difference exists between the liquid-hydrogen and the gaseous hydrogen in the liquid-hydrogen tank 104. At a gas-liquid equilibrium pressure, the gaseous hydrogen has a density of about $1 kg/m^3$ while the liquid-hydrogen has a density of about $71 kg/m^3$. This density difference affects the axial guided wave propagation through the rod (e.g., there is a difference between how the wave travels through the rod when it is exposed to gaseous hydrogen versus liquid-hydrogen and this difference provides insight into the liquid-level within the liquid-hydrogen tank).

With reference to Fig. 3, in certain embodiments, the liquid-hydrogen tank 104 can be a first liquid-hydrogen tank, and the liquid level sensing system 100 can further include a second liquid-hydrogen tank 204 positioned at different location from the first liquid-hydrogen tank 104 on an aircraft 200. For example, one of the first liquid-hydrogen tank 104 or the second liquid-hydrogen tank 204 can be placed at the front end of the aircraft 200 and the other of the first liquid-hydrogen tank 104 and the second liquid-hydrogen tank 204 can be placed at the rear end of the aircraft 200 for weight balance. The first liquid-hydrogen tank 104 and the second liquid-hydrogen tank 204 each include a respective sensing probe 102 as described herein.

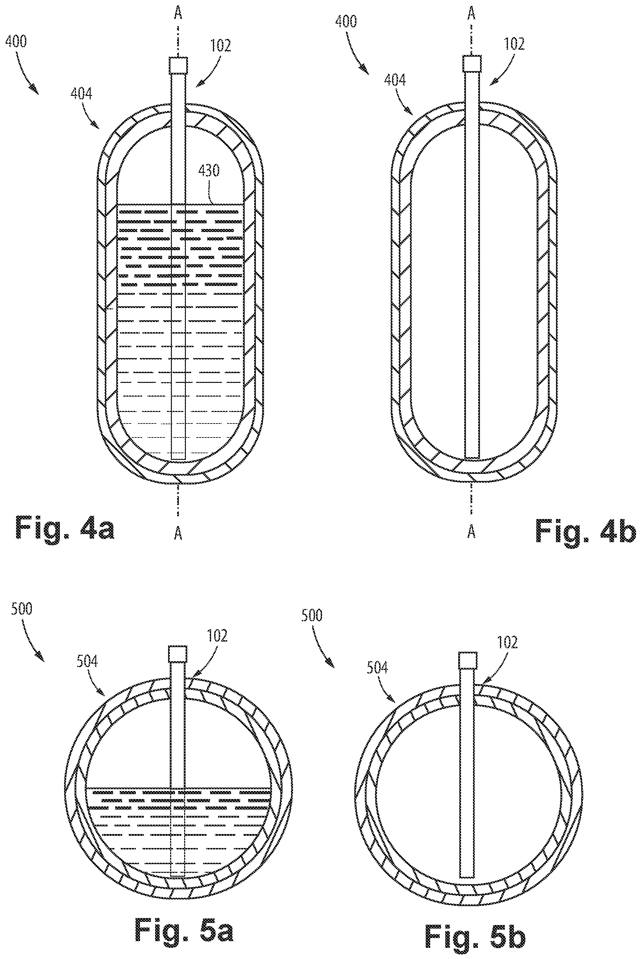

In certain embodiments, a longitudinal axis A of the liquid-hydrogen tank 104 can extend parallel to a liquid level surface (e.g., liquid level plane 130) within the liquid-hydrogen tank 104 (e.g., as shown in Figs. 1a). With reference to Fig. 4a, in another embodiment, liquid level sensing system 400 is shown. The longitudinal axis A of the liquid-hydrogen tank 404 can be perpendicular to the liquid level surface 430 within the liquid-hydrogen tank 404 (e.g., as shown in Figs. 4a). In Fig. 4a, the liquid-hydrogen tank 404 is shown with liquid in it and in Fig. 4b, the liquid-hydrogen-tank 404 is shown being empty. Liquid level sensing system 400 is as described above with respect to liquid level sensing system 100. Liquid-hydrogen tank 404 includes sensing probe 102 as described in detail above.

With reference to Figs. 5a-5b, in another embodiment, liquid level sensing system 500 is shown. The liquid-hydrogen tank 504 can be spherical. In Fig. 5a, the liquid-hydrogen tank 504 is shown with liquid in it and in Fig. 5b, the liquid-hydrogen tank 504 is shown being empty. Liquid level sensing system 500 is as described above with respect to liquid level sensing system 100. Liquid-hydrogen tank 504 includes sensing probe 102 as described in detail above. Any liquid-hydrogen tank shape and orientation are contemplated herein. Regardless of the shape and orientation of the liquid-hydrogen tank, the orientation of the rod remains as described above with respect to liquid sensing system 100 and the second end of the rod is free so as to not be touching the bottom side of the liquid-hydrogen tank. Liquid volume calculations differ for each of the various shapes and orientations of the liquid-hydrogen tank.

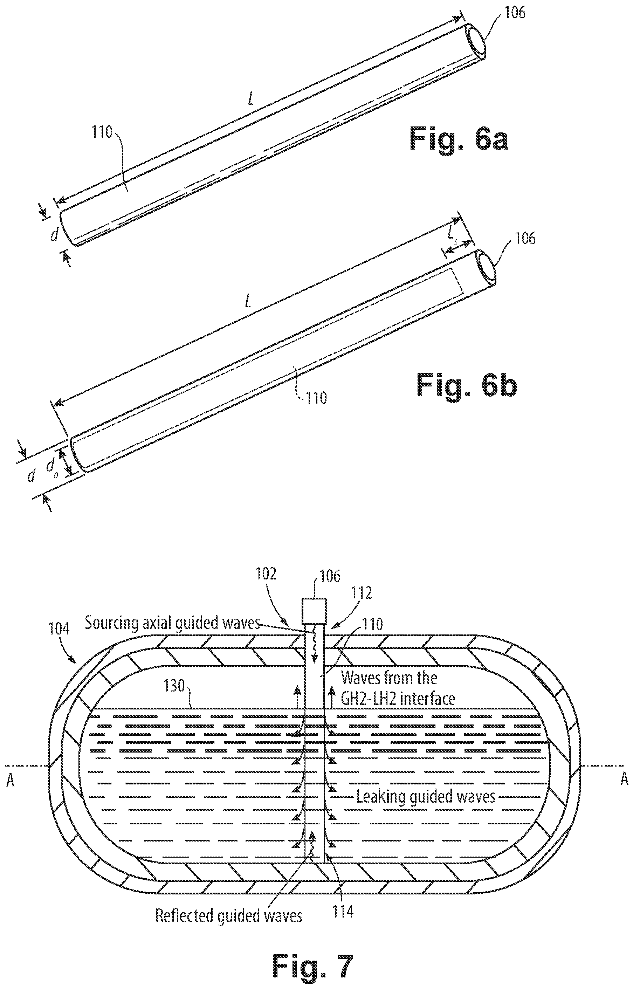

In certain embodiments, the rod 110 can be hollow, making it more light weight (e.g., as shown in Fig. 6b). In other embodiments, the rod 110 can be solid (e.g., as shown in Fig. 6a). In some embodiments, the rod 110 can be a metallic rod. For example, for a metallic rod, aerospace grade aluminum 5083 alloy can be used because it offers stability in a cryogenic temperature. Aerospace grade aluminum 5083 alloy can be used in extremely low temperatures (e.g., as low as 3K, -270°C, -454°F). At a cryogenic temperature, the metallic rod has increased ultimate tensile and yield strength without compromising the impact strength. Further, at a cryogenic temperature the metallic rod retains its toughness and does not exhibit ductile-to-brittle transition. The metallic rod exhibits low wave dissipation and high wave speed. The axial guided wave maintains its shape due to the low wave dissipation to offer accurate gauging of the liquid-hydrogen level, while offering fast measurement due to the high wave speed.

In other embodiments, the rod 110 can be of a composite material. For example, the rod 110 can be made of carbon fiber reinforced polymer (CFRP). CFRP can also be used in the cryogenic temperature environment within the liquid-hydrogen tank. At a cryogenic temperature, the composite rod also has increased ultimate tensile and yield strength without compromising the impact strength. Further, at a cryogenic temperature the composite rod also retains its toughness and does not exhibit ductile-to-brittle transition. The composite rod offers higher wave dissipation and lower wave speed than the metallic rod, while still being capable of gauging liquid-hydrogen levels. Composite rods offer less heat leakage than the metallic rods.

A method for measuring a liquid level includes sending a pulse from a transmitter 132 at a first end 112 of a rod 110 along a length of the rod 110 to a second end 114 of the rod 110 in a liquid-hydrogen tank 104 and back up the length of the rod 110 to the first end 112 of the rod 110, receiving the pulse at a receiver 134 at the first end 112 of the rod 110, and measuring data collected about the pulse to determine a liquid level in the liquid-hydrogen tank 104. The pulse can be an axial guided wave transmitted along a longitudinal axis A of the rod 110. The pulse can have various shapes (e.g., square, sinusoidal, toneburst, etc.).

In certain embodiments, measuring data can further include measuring time it takes for the axial guided wave to travel from the first end 112 of the rod 110 to the second end 114 of the rod 110 and back to the first end 112 of the rod 110, calculating the speed of the axial guided wave as it travels from the first end 112 of the rod 110 to the second end 114 of the rod 110 and back to the first end 112 of the rod 110, measuring time it takes for the axial guided wave to travel from the first end 112 of the rod 110 to a liquid level and back to the first end 112 of the rod 110 and determining the liquid level based on difference between the time it takes for the axial guided wave to travel from the first end 112 of the rod 110 to the second end 114 of the rod 110 and back to the first end 112 of the rod 110 and the time it takes for the axial guided wave to travel from the first end 112 of the rod 110 to the liquid level and back to the first end 112 of the rod 110.

In certain embodiments, measuring data can further include measuring a change in amplitude of the axial guided wave as it travels from the first end 112 of the rod 110 through a liquid level plane 130 to the second end 114 of the rod 110 back through the liquid level plane 130 to the first end 112 of the rod 110. In certain embodiments, measuring data can further include measuring a change in hydrostatic pressure of the axial guided wave as it travels from the first end 112 of the rod 110 through a liquid level plane 130 to the second end 114 of the rod 110 back through the liquid level plane 130 to the first end 112 of the rod 110. In some embodiments, the pulse can be a Rayleigh wave transmitted along an outer circumference of the rod 110.

As shown in Fig. 7, the axial guided wave propagates through the rod 110 at a wave speed of about 5,200 m/s (e.g., approx. 11,600 mph). When the axial guided wave reaches the interface 130 between the liquid-hydrogen and the gaseous hydrogen, wave leakage begins. The longer the amount of time the axial guided wave travels through the liquid-hydrogen, the more wave leakage occurs. When the axial guided wave reaches the second end of the rod 114, it reverses and travels back up towards the first end of the rod 112. With respect to the reflected reverse axial guided wave, further wave leakage occurs which also is a function of the liquid-hydrogen level.

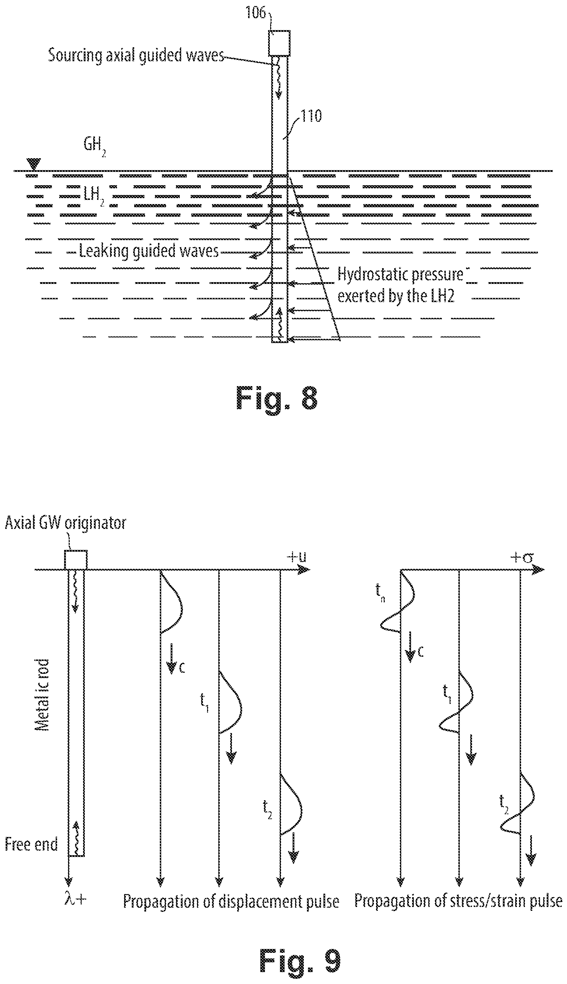

The boundary conditions at the interface 130 between the gaseous hydrogen and the liquid-hydrogen affect the amount of wave leakage into the liquid medium. For example, as shown in Fig. 8, as the liquid-hydrogen level rises, more hydrostatic pressure is exerted on the rod. The effect of the hydrostatic pressure on the wave leakage is illustrated in Fig. 8. By measuring the reflected waves, the amount of wave leakage can be determined.

With reference to Fig. 9, the propagation the axial guided wave from the source (e.g., transmitter) is illustrated. As shown in Fig. 9, the axial guided wave pulse generates a half sinusoidal shape displacement. At time $t_0$, the pulse is fully developed and propagates in the +y direction at wave speed c. The wave speed is a direct function of the rod's modulus of elasticity E and density $\rho$ as follows:

$$c = \sqrt{\frac{E}{\rho}}$$

For example, aluminium 5083 alloy has a modulus of elasticity E=71 GPa and density $\rho$=2,660 kg/m$^3$. Based on the above equation, this results in a wave speed c of 5,166 m/s. At a cryogenic temperature (e.g., 16K-20K), these properties remain approximately the same.

As the wave propagation progresses to $t_1$ and $t_2$, the wave pulse moves as illustrated in Fig. 9. The governing wave equation for the axial guided wave through the rod is expressed as follows:

$$c^2 \frac{\partial^2 u}{\partial y^2} = \frac{\partial^2 u}{\partial t^2}$$

where c is the wave speed, u is the particle displacement, y is the axial direction and t is the time.

The propagation of the axial guided wave is represented by the d'Alembert solution as follows:

$$u(y,t) = f(y - ct) + g(y + ct)$$

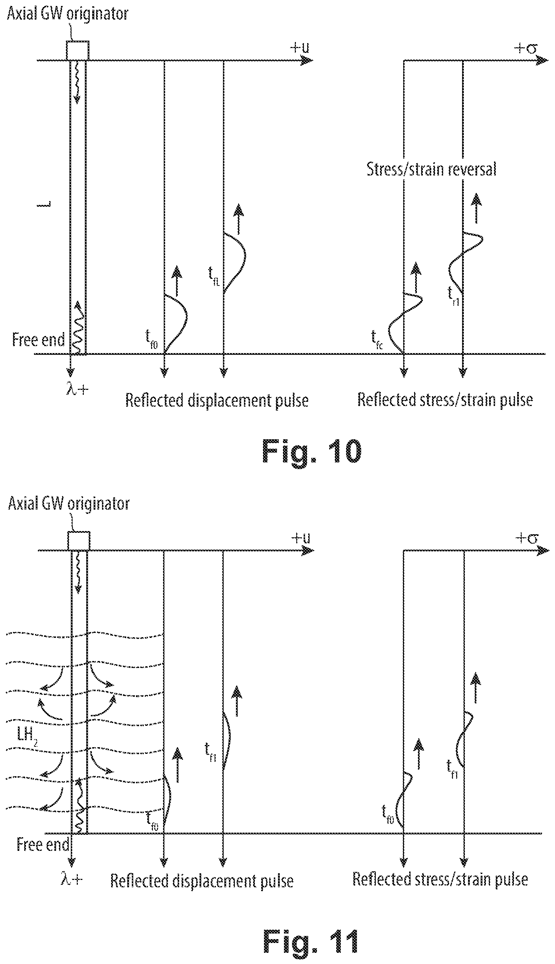

where $u(y,t)$ represents the displacement field, $f(y-ct)$ represents the forward propogating wave (+y direction in Fig. 9), and $g(y+ct)$ represents the reflected axial guided wave propogating towards the source (-y direction, shown in Fig. 10).

With continued refercne to Fig. 9, the corresponding stress and strain propogation is shown. The strain ansd stress values are null when the displacment is maximum. The strain and stress wave propogation are represented as follows:

$$\boxed{\text{Strain}} \qquad \epsilon(y,t) = \frac{\partial u}{\partial y} = f'(y - ct) + g'(y + ct)$$

$$\boxed{\text{Stress}} \qquad \sigma(y,t) = \epsilon E = E[f'(y - ct) + g'(y + ct)]$$

Where $\varepsilon(y,t)$ is the strain field, $\sigma(y,t)$ is the stress field, f'(y-ct) and g'(y-ct) indicates the first derivative of the f(y-ct) and g(y-ct) functions, repectively.

As shownin Fig. 10, when the axial guided wave reflects from the second end of the rod 114 back towards the first end of the rod 112, the axial guided wave travels in the -y direction towards the source (e.g., transmitter). The time of flight $T_f$ is the time required for the axial guided wave to travel from the first end of the rod 112 to the second end of the rod 114 and back to the first end of the rod 112. The time of flight can be represented as follows:

$$T_f = 2 * (t_{f0} - t_0)$$

where $t_0$ is the time when the source produces a fully developed pulse and $t_{f0}$ is the time when the pulse starts to reflect from the second end of the rod 114.

With continued reference to Fig. 10, when the axial guided wave reaches the second end of the rod 114, stress and strain reversal occurs. The tension is converted into compression and compression is converted into tension. The stress and strain reversal phenomena is recongnized in the reflected pulse. When the liquid-hydrogen tank 104 is empty or near empty, the reversed stress and strain wave has little to no wave leakage into the liquid-hydrogen. The reversed stress and strain is much stonger in the case of a partially or fully filled liquid-hydrogen tank.

The actual time of flight $T_f$ for a pluse reflected from the second end of the rod 114 can be accurately determined by analyzing the reverse stress and strain wave. Hence, actual wave speed can be determined as follows:

$$c_a = L/T_f$$

where $c_a$ is the actual wave speed and $L$ is the length of the rod 110.

When the liquid-hydrogen tank 104 is partially filled with liquid-hydrogen, the axial guided wave hits the intreface 130 of the gaseous hydrogen and the liquid-hydrogen and the acoustic impedance at the interface is large. The acoustic impedance is defined as follows:

$$Z = \rho c$$

where $\rho$ is the density and c is the wave speed. Since the density of liquid-hydrogen is about 70 times higher that the density of gaseous hydrogen, the acoustic impedance for liquid-hydrogen is about 70 times higher than that of gaseous hydrogen, assuming the same wave speed. There are reflecetd waves from the interface 130 of the liquid-hydrogen and gaseous hydrogen because of the large acoustic impedance difference (e.g., when the pulse hits the interface, some waves are reflected back towards the source). By measuring the actual wave speed and time of flight of the reflected waves, the height of the gaseous hydrogen can be calculated, hence the liquid-hydrogen level can be calculated.

When the axial guided wave travels through liquid-hydrogen, wave leakage occurs (e.g., as shown in Fig. 11). The axial guided wave travels from the first end of the rod 112 to the second end of the rod 114 and back to the first end of the rod 112. When the rod 110 is surrounded by liquid-hydrogen, the amplitude of the axial guided wave pulse decreases both as the wave travels trowards the second end of the rod 114 and as it travels back up towards the first end of the rod 112. In contrast, when the rod 110 is surrounded by gaseous hydrogen, there is little to no amplitude reduction because the acoustic impedance of the gaseous hydrogen is low. The refelected pulse can be recognized by the stress and strain phenomena. The amount of amplitude reduction is a direct function of the liquid-hydrogen level. By measuring the reduction of the wave amplitude, the liquid-hydrogen level can be calculated.

Rayleigh waves (e.g., higher frequency sourcing waves) can be transmitted through the rod 110. The Rayleigh waves are mostly confined at the circumferential surface of the rod 110 as opposed to traveling through the center of the rod 110 (e.g., along Axis A). In this case, the energy dissipation is higher in the liquid-hydrogen than with the axial guided waves. Rayleigh waves are more sesnitive to the interface between the gaseous hydrogen and the liquid-hydrogen since the Rayleigh waves propogate along the circumferential surface of the rod. As a result, wave interactions occur with the interface across the entire circumference of the rod 110. There is minimal dissipation in the gaseous hydrogen. The higher the liquid-hydrogen level, the higher the wave dissipation into the liquid-hydrogen. By measuring the Rayleigh wave dissipation, the liquid-hydrogen level can be determined.

In certain embodiments, the use of axial guided waves provides liquid-hydrogen level gauging in a non-invasive and safer manner than traditional methods. Axial guided waves are applicable to a large variety of tank designs and physical orientations within an aircarft. The use of axial guided waves does not increase or affect the cryogenic temperature or the pressure within the liquid-hydrogen tank.

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

Aspects and embodiments of the present invention include the following clauses.

Clause 1. A liquid level sensing system, comprising:

    a sensing probe, comprising:

an axial guided wave (AGW) transducer, wherein the AGW transducer includes a sensing element; and
a rod operatively associated with the AGW transducer, wherein the AGW transducer is operatively connected to a first end of the rod; and

a liquid tank, wherein a second end of the rod extends through an opening in an inner wall of the liquid tank into the liquid tank, wherein the first end of the rod and the AGW transducer are outside of the inner wall.

Clause 2. The liquid level sensing system of clause 1, wherein the liquid tank is a liquid-hydrogen tank, wherein the inner wall of the liquid tank is surrounded by an outer wall, wherein the second end of the rod extends through an opening in the inner wall.

Clause 3. The liquid level sensing system of clause 2, wherein the openings in the inner and outer walls of the liquid-hydrogen tank are at a top side of the liquid-hydrogen tank, wherein the top side of the liquid-hydrogen tank is opposite a bottom side of the liquid-hydrogen tank, wherein the second end of the rod is spaced apart from the bottom side of the liquid-hydrogen tank.

Clause 4. The liquid level sensing system of clause 2 or 3, wherein the outer wall of the liquid-hydrogen tank and the inner wall of the liquid-hydrogen tank are separated by a vacuum jacket.

Clause 5. The liquid sensing system of clause 2, 3 or 4, wherein the sensing probe is positioned at an angle with respect to a liquid level plane of the liquid-hydrogen tank.

Clause 6. The liquid level sensing system of clause 5, wherein the angle of the sensing probe with respect to the liquid level plane is greater than zero degrees and less than 180 degrees.

Clause 7. The liquid level sensing system of any preceding clause, wherein the sensing element includes at least one transmitter and/or receiver.

Clause 8. The liquid level sensing system of clause 7, wherein the at least one transmitter and/or receiver includes one transmitter and a plurality of receivers.

Clause 9. The liquid level sensing system of clause 7, wherein the at least one transmitter and/or receiver includes one transmitter and one receiver.

Clause 10. The liquid level sensing system of any one of clauses 1-6, wherein the sensing element is configured to act as both a transmitter and receiver.

Clause 11. The liquid level sensing system of any one of clauses 2-10, wherein the liquid-hydrogen tank includes both liquid-hydrogen and gaseous hydrogen and a liquid-hydrogen gaseous hydrogen interface exists therebetween, such that the liquid-hydrogen occupies a bottom portion of the liquid-hydrogen tank and the gaseous hydrogen occupies a top portion of the tank.

Clause 12. The liquid level sensing system of any one of clauses 7-11, wherein the at least one transmitter is configured to transmit a pulse along a length of the rod from the first end of the rod to the second end of the rod and back to the first end of the rod, wherein the at least one receiver is configured to receive a reflected pulse.

Clause 13. The liquid level sensing system of any preceding clause, wherein the liquid-hydrogen tank is a first liquid-hydrogen tank, and further comprising a second liquid-hydrogen tank positioned at different location from the first liquid-hydrogen tank on an aircraft.

Clause 14. The liquid level sensing system of clause 1, wherein a longitudinal axis of the liquid-hydrogen tank extends parallel to a liquid level surface within the liquid-hydrogen tank.

Clause 15. The liquid level sensing system of clause 14, wherein the longitudinal axis of the liquid-hydrogen tank is perpendicular to the liquid level surface within the liquid-hydrogen tank.

Clause 16. A method for measuring a liquid level, comprising:

sending a pulse from a transmitter at a first end of a rod along a length of the rod to a second end of the rod in a liquid-hydrogen tank and back up the length of the rod to the first end of the rod;

receiving the pulse at a receiver at the first end of the rod; and

measuring data collected about the pulse to determine a liquid level in the liquid-hydrogen tank.

Clause 17. The method of clause 16, wherein the pulse is an axial guided wave transmitted along a longitudinal axis of the rod.

Clause 18. The method of clause 17, wherein measuring data further includes:

measuring time it takes for the axial guided wave to travel from the first end of the rod to the second end of the rod and back to the first end of the rod and calculating speed of the axial guided wave;

measuring time it takes for the axial guided wave to travel from the first end of the rod to a liquid level and back to the first end of the rod; and

determining the liquid level based on difference between the time it takes for the axial guided wave to travel from the first end of the rod to the second end of the rod and back to the first end of the rod and the time it takes for the axial guided wave to travel from the first end of the rod to the liquid level and back to the first end of the rod.

Clause 19. The method of clause 17 or 18, wherein measuring data further includes:

measuring a change in amplitude of the axial guided wave as it travels from the first end of the rod through a liquid level plane to the second end of the rod back through the liquid level plane to the first end of the rod.

Clause 20. The method of clause 17, 18 or 19, wherein measuring data further includes:

measuring a change in hydrostatic pressure of the axial guided wave as it travels from the first end of the rod through a liquid level plane to the second end of the rod back through the liquid level plane to the first end of the rod.

**Claims**

1. A liquid level sensing system, comprising:

   a sensing probe, comprising:

   an axial guided wave (AGW) transducer, wherein the AGW transducer includes a sensing element; and
   a rod operatively associated with the AGW transducer, wherein the AGW transducer is operatively connected to a first end of the rod; and

   a liquid tank, wherein a second end of the rod extends through an opening in an inner wall of the liquid tank into the liquid tank, wherein the first end of the rod and the AGW transducer are outside of the inner wall.

2. The liquid level sensing system of claim 1, wherein the liquid tank is a liquid-hydrogen tank, wherein the inner wall of the liquid tank is surrounded by an outer wall, wherein the second end of the rod extends through an opening in the inner wall.

3. The liquid level sensing system of claim 2, wherein the openings in the inner and outer walls of the liquid-hydrogen tank are at a top side of the liquid-hydrogen tank, wherein the top side of the liquid-hydrogen tank is opposite a bottom side of the liquid-hydrogen tank, wherein the second end of the rod is spaced apart from the bottom side of the liquid-hydrogen tank.

4. The liquid level sensing system of claim 2 or 3, wherein the outer wall of the liquid-hydrogen tank and the inner wall of the liquid-hydrogen tank are separated by a vacuum jacket, and wherein the sensing probe is positioned at an angle with respect to a liquid level plane of the liquid-hydrogen tank.

5. The liquid level sensing system of claim 4, wherein the angle of the sensing probe with respect to the liquid level plane is greater than zero degrees and less than 180 degrees.

6. The liquid level sensing system of any preceding claim, wherein the sensing element includes at least one transmitter and/or receiver, or wherein the sensing element is configured to act as both a transmitter and receiver.

7. The liquid level sensing system of claim 6, wherein the sensing element includes one transmitter and a plurality of receivers, or wherein the sensing element includes one transmitter and one receiver.

8. The liquid level sensing system of claim 6 or 7, wherein the liquid-hydrogen tank includes both liquid-hydrogen and gaseous hydrogen and a liquid-hydrogen gaseous hydrogen interface exists therebetween, such that the liquid-hydrogen occupies a bottom portion of the liquid-hydrogen tank and the gaseous hydrogen occupies a top portion of the tank, and wherein the at least one transmitter is configured to transmit a pulse along a length of the rod from the first end of the rod to the second end of the rod and back to the first end of the rod, wherein the at least one receiver is configured to receive a reflected pulse.

9. The liquid level sensing system of any preceding claim, wherein the liquid-hydrogen tank is a first liquid-hydrogen tank, and further comprising a second liquid-hydrogen tank positioned at different location from the first liquid-hydrogen tank on an aircraft.

10. The liquid level sensing system of any preceding claim, wherein a longitudinal axis of the liquid-hydrogen tank extends parallel to a liquid level surface within the liquid-hydrogen tank, and wherein the longitudinal axis of the liquid-hydrogen tank is perpendicular to the liquid level surface within the liquid-hydrogen tank.

11. A method for measuring a liquid level, comprising:

sending a pulse from a transmitter at a first end of a rod along a length of the rod to a second end of the rod in a liquid-hydrogen tank and back up the length of the rod to the first end of the rod;
receiving the pulse at a receiver at the first end of the rod; and
measuring data collected about the pulse to determine a liquid level in the liquid-hydrogen tank.

12. The method of claim 11, wherein the pulse is an axial guided wave transmitted along a longitudinal axis of the rod.

13. The method of claim 12, wherein measuring data further includes:

measuring time it takes for the axial guided wave to travel from the first end of the rod to the second end of the rod and back to the first end of the rod and calculating speed of the axial guided wave;
measuring time it takes for the axial guided wave to travel from the first end of the rod to a liquid level and back to the first end of the rod; and
determining the liquid level based on difference between the time it takes for the axial guided wave to travel from the first end of the rod to the second end of the rod and back to the first end of the rod and the time it takes for the axial guided wave to travel from the first end of the rod to the liquid level and back to the first end of the rod.

14. The method of claim 12 or 13, wherein measuring data further includes:
measuring a change in amplitude of the axial guided wave as it travels from the first end of the rod through a liquid level plane to the second end of the rod back through the liquid level plane to the first end of the rod.

15. The method of claim 12, 13 or 14, wherein measuring data further includes:
measuring a change in hydrostatic pressure of the axial guided wave as it travels from the first end of the rod through a liquid level plane to the second end of the rod back through the liquid level plane to the first end of the rod.

**Fig. 1a**

**Fig. 1b**

**Fig. 2a**  **Fig. 2b**  **Fig. 2c**

**Fig. 3**

Fig. 4a

Fig. 4b

Fig. 5a

Fig. 5b

Fig. 6a

Fig. 6b

Fig. 7

106

Sourcing axial guided waves

110

GH$_2$

LH$_2$

— Leaking guided waves

Hydrostatic pressure
exerted by the LH2

## Fig. 8

Axial GW originator

+u

+σ

Metal ic rod

c

t$_n$

c

t$_1$

t$_1$

t$_2$

t$_2$

Free end

λ+

Propagation of displacement pulse

Propagation of stress/strain pulse

## Fig. 9

Fig. 10

Fig. 11

Europäisches
Patentamt

European
Patent Office

Office européen
des brevets

# EUROPEAN SEARCH REPORT

Application Number

EP 24 21 7247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 339 563 A1 (SIMMONDS PRECISION PRODUCTS [US]) 20 March 2024 (2024-03-20) * paragraphs [0013] - [0032]; figures 1-9 * | 1-15 | INV. G01F23/2962 G01F23/2965 |
| X | DHAYALAN R ET AL: "Development of ultrasonic waveguide sensor for liquid level measurement in loop system", ELECTRONICS LETTERS, THE INSTITUTION OF ENGINEERING AND TECHNOLOGY, GB, vol. 56, no. 21, 15 October 2020 (2020-10-15), pages 1120-1122, XP006093104, ISSN: 0013-5194, DOI: 10.1049/EL.2020.1678 | 1,6,7 | ADD. F17C13/02 B64D37/30 |
| Y | * page 1120 - page 1122; figures 2-6 * | 14,15 | |
| X | US 2007/169549 A1 (KWUN HEGEON [US] ET AL) 26 July 2007 (2007-07-26) | 1,6,7 | |
| Y | * paragraphs [0017] - [0034]; figure 2 * | 14,15 | |
| X | JP 2001 295998 A (JAPAN RADIO UEDA CO LTD) 26 October 2001 (2001-10-26) | 1,6-8, 10-13 | TECHNICAL FIELDS SEARCHED (IPC) |
| Y | * paragraphs [0011] - [0020], [0027] - [0031]; figures 4, 5 * | 14,15 | G01F F17C B64D |
| X | WO 2020/094221 A1 (WAERTSILAE FINLAND OY [FI]) 14 May 2020 (2020-05-14) | 1-5 | |
| Y | * paragraphs [0003], [0027] - [0031], [0038], [0039]; figures 1, 4, 5 * | 9 | |
| Y | EP 4 269 958 A1 (SIMMONDS PRECISION PRODUCTS [US]) 1 November 2023 (2023-11-01) | 9 | |
| A | * paragraphs [0019] - [0032]; figures 1-6 * | 1-8, 10-15 | |

The present search report has been drawn up for all claims

| Place of search | Date of completion of the search | Examiner |
|---|---|---|
| The Hague | 10 April 2025 | Myrillas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7247

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | | Publication date | Patent family member(s) | | Publication date |
|---|---|---|---|---|---|
| EP 4339563 | A1 | 20-03-2024 | EP | 4339563 A1 | 20-03-2024 |
| | | | US | 2024085235 A1 | 14-03-2024 |
| US 2007169549 | A1 | 26-07-2007 | NONE | | |
| JP 2001295998 | A | 26-10-2001 | NONE | | |
| WO 2020094221 | A1 | 14-05-2020 | CN | 112969883 A | 15-06-2021 |
| | | | EP | 3877693 A1 | 15-09-2021 |
| | | | KR | 20210083329 A | 06-07-2021 |
| | | | WO | 2020094221 A1 | 14-05-2020 |
| EP 4269958 | A1 | 01-11-2023 | EP | 4269958 A1 | 01-11-2023 |
| | | | US | 2023349747 A1 | 02-11-2023 |

EPO FORM P0459

For more details about this annex : see Official Journal of the European Patent Office, No. 12/82